# EUROPEAN PATENT SPECIFICATION

(11) **EP 0 826 076 B1**
(45) Date of publication and mention of the grant of the patent: **07.07.1999**
(21) Application number: 96914918.6
(22) Date of filing: 15.04.1996
(51) Int. Cl.: C23C 28/00

(54) **METAL COMPONENT WITH A HIGH-TEMPERATURE PROTECTION COATING SYSTEM AND A METHOD OF COATING THE COMPONENT**
METALLISCHES BAUELEMENT MIT HOCHTEMPERATUR SCHUTZBESCHICHTUNG UND VERFAHREN ZUM BESCHICHTEN EINES BAUELEMENTES
COMPOSANT METALLIQUE PRESENTANT UN SYSTEME DE REVETEMENT LE PROTEGEANT DES TEMPERATURES ELEVEES, ET PROCEDE DE REVETEMENT DE CE COMPOSANT

(30) Priority: 27.04.1995 US 432432
(43) Date of publication of application: 04.03.1998
(73) Proprietor: SIEMENS AKTIENGESELLSCHAFT, 80333 München (DE)
(72) Inventor: BEELE, Wolfram, 52074 Aachen (DE)
(86) International application number: EP9601578
(87) International publication number: WO9634130

(56) References cited:
- EP-A- 0 532 255
- EP-A- 0 705 912
- EP-A- 0 718 419
- WO-A-81/01983
- WO-A-92/05298
- WO-A-93/18199
- DE-C- 4 003 038
- US-A- 3 869 779
- US-A- 4 814 232
- US-A- 4 916 022
- US-A- 5 350 599
- US-A- 5 409 748
- US-A- 5 498 484

## Description

The invention relates to metal components with high-temperature protective coating systems and to a method of coating such metal components.

U.S. Patent No. 3,873,347 to Walker et al. and U.S. Patent No. 3,874,901 to Rairden disclose methods of improving the high temperature oxidation and corrosion resistance of a nickel or cobalt-base superalloy body, in particular a gas turbine component, by providing a coating system for the body comprising the steps of placing an alloy layer on the body, the alloy layer being made from an alloy now known as MCrAlY alloy, and placing an aluminide layer on the alloy layer, according to U.S. Patent No. 3,874,901 followed by heat treating the coated body to obtain interdiffusion of aluminum into the alloy layer. The improvement in corrosion and oxidation resistance is ascribed mainly to the aluminide layer, because it increases the amount of aluminum present in the coating system.

U.S. Patent Nos. 4,055,705 to Stecura et al.; 4,321,310 to Ulion et al.; and 4,321,311 to Strangman disclose coating systems for gas turbine components made from nickel or cobalt-based superalloys. A coating system described comprises a thermal barrier layer made from ceramic, which in particular has a columnar grained structure, placed on a bonding layer which in its turn is placed on the substrate and bonds the thermal barrier layer to the substrate. The bonding layer is made from an MCrAlY alloy, namely an alloy containing chromium, aluminum and a rare earth metal such as yttrium in a basis comprising at least one of iron, cobalt and nickel. Further elements can also be present in an MCrAlY alloy; examples are given below. An important feature of the bonding layer is a thin alumina layer developed on the MCrAlY alloy and used for anchoring the thermal barrier layer.

U.S. Patent No. 5,238,752 to Duderstadt et al. discloses a coating system for a gas turbine component which also incorporates a ceramic thermal barrier layer and a bonding layer bonding the thermal barrier layer to the substrate. The bonding layer is made from an intermetallic aluminide compound, in particular nickel aluminide or platinum aluminide. The bonding layer also has a thin alumina layer which serves to anchor the thermal barrier layer.

U.S. Patent No. 5,262,245 to Ulion et al. describes a result of an effort to simplify coating systems incorporating thermal barrier layers for gas turbine components by avoiding bonding layers. To this end, a composition for a superalloy is disclosed which may be used to form a substrate of a gas turbine component and which develops an alumina layer on its outer surfaces under a suitable treatment. This alumina layer is used to anchor a ceramic thermal barrier layer placed thereon, eliminating the need for a special bonding layer to be interposed between the substrate and the thermal barrier layer.

U.S. Patent No. 5,087,477 to Giggins et al. teaches a method for placing a ceramic thermal barrier layer on a gas turbine component by a physical vapor deposition technique comprising evaporating compounds forming the thermal barrier layer with an electron beam and establishing an atmosphere having a controlled content of oxygen at the component to receive the thermal barrier layer.

U.S. Patent Nos. 5,154,885; 5,268,238; 5,273,712; and 5,401,307 to Czech et al. disclose advanced coating systems for gas turbine components comprising protective coatings of MCrAlY alloys. The MCrAlY alloys disclosed have carefully balanced compositions to give exceptionally good resistance to corrosion as well as to oxidation as well as an exceptionally good compatibility to the superalloys used for the substrates. The basis of the MCrAlY alloys is formed by nickel and/or cobalt. Additions of further elements, in particular silicon and rhenium, are also discussed. Rhenium in particular is shown to be a very advantageous additive. All MCrAlY alloys shown are also very suitable as bonding layers for anchoring thermal barrier layers, particularly in the context of the invention disclosed hereinbelow.

Gas turbine components like blades, vanes and heat shield elements comprising bodies made of metals like nickel or cobalt-based superalloys are commonly protected against corrosive attacks including oxidation and sulfidation at elevated temperatures by coating systems comprising protective coatings covering exposed parts of the bodies. As explained in the documents of the state of the art mentioned above, a coating system placed on an outer surface of a body may include an alloy layer made from an MCrAlY alloy and a ceramic layer, which acts as a thermal barrier layer, placed on the alloy layer.

Gas turbine components which have to sustain heavy thermal loads when in operation also frequently have internal channels through which a cooling fluid is guided. Normally, a channel has a first opening in a mounting portion of the component at which the component is fixedly held in operation and a plurality of second openings disposed in an active portion of the component which is exposed to a gas stream streaming along the component during operation. The cooling fluid is generally admixed to the gas stream through the second openings, eventually after having formed a cooling film covering and protecting a surface of the active portion against an immediate contact with the gas stream.

A body of a gas turbine component might well be subject to a corrosive or oxidative attack within a channel formed therein, since the temperature prevailing at an inner surface defined by a channel in a body may still be fairly high, and thus a chemical reaction between a constituent of the fluid flowing through the channel and the material of the body is encouraged. Even if the fluid is air or a mixture of air and steam according to usual practice, contaminants of the air like salt from a marine environment or ammonia and/or sulphur compounds from a rural environment might give rise to corrosion. As a measure against such attacks, inner surfaces of channels in gas turbine components usually have aluminide coatings placed thereon.

When manufacturing a gas turbine component by placing an alloy layer and a ceramic layer on an outer surface and an aluminide coating on an inner surface, care must be exercised to avoid disadvantageous interactions between the constituents of the coating system on the outer surface and the coating on the inner surface. Particularly critical is the aluminide compound which is placed on the inner surface by gas phase aluminizing and cannot be prevented sufficiently from precipitating also on the outer surface of the component. Usually, the alloy layer is placed on the outer surface but left with its original roughness prior to aluminizing the inner surface. Then, the inner surface is aluminized and the alloy layer inevitably aluminized as well, and subsequently the alloy layer with the aluminizing layer thereon is smoothened, eventually by grinding and/or polishing, to the desired residual roughness.This treatment removes a considerable part of the aluminide layer on the alloy layer, but never assuredly all. The ceramic layer must thus be placed on a surface with an ill-defined chemical composition, and the robustness of the ceramic layer obtained may be questionable. A complete removal of the aluminide from the alloy layer, however, would require more elaborated measures and render the manufacturing process uneconomically expensive.

As an alternative to the coating process just described, it has been contemplated to place an aluminide layer both on the inner surface and the outer surface of a gas turbine component prior to placing the alloy layer on the outer surface. In that case however, an aluminium rich and thus brittle phase is formed in the body of the component due to diffusion of the aluminum richly present, which might embrittle the body itself and thus render its usefulness questionable.

It is accordingly an object of the invention to provide a metal component with a high-temperature protection coating system and a method of coating the component, which overcomes the above-mentioned disadvantages of the heretofore-known devices and methods of this general type and which fulfills the need to improve known coating systems to make them and their intended function less sensitive to aluminide layers and more adapted to be employed together with aluminide layers independent of the use and location of these aluminide layers, if only an interaction between an aluminide layer and a coating system at any time exists.

With the foregoing and other objects in view there is provided, in accordance with the invention, a method of coating an outer surface of a body of an article of manufacture formed of a metal, said body having a inner surface defined by a channel formed in said body, the method which comprises the following steps:
coating said outer surface of the body with an alloy layer and polishing the alloy layer;
coating the alloy layer and concurrently the inner surface; with an aluminide layer having a substantially uniform thickness and
coating the aluminide layer with a ceramic layer.

In accordance with an additional mode of the invention, the step of coating the alloy layer comprises providing the aluminide layer on the inner surface having a thickness of up to 50 micrometers; and providing the aluminide layer on the alloy layer having a thickness of up to 10 micrometers.

In accordance with another mode of the invention, the aluminide layer are polished in the placing step. The aluminide layer may be deposited by gas phase aluminizing.

In accordance with a further mode of the invention, the method includes a step of polishing the aluminide layer prior to the step of coating the ceramic layer.

In accordance with a concomitant mode of the invention, the step of polishing the alloy layer comprises providing the alloy layer having a surface roughness Ra being less than 2 micrometers. The term Ra indicates a surface roughness which has been determined by a standardized method for measurement. In particular, Ra is determined as follows: On a surface whose roughness is to be measured, a reference line of suitable length is defined. A smooth profile of the surface along the reference line is determined by a least-squares fit. Ra is determined as the arithmetic mean value of the absolute values of deviations of the actual surface from the smooth profile along the reference line. The reference line must be long enough to eliminate influences of statistical fluctuations on the value of Ra, and it must be short enough to retain ist significance as a representative of the whole surface.

In accordance with the invention, there is further provided a method of coating an outer surface of a body of an article of manufacture formed of a metal, the method which comprises the following steps:
...coating said outer surface of the body with an alloy layer and polishing the alloy layer;
coating an aluminide layer having a substantially uniform thickness on the alloy layer with gas phase aluminizing; and
coating the aluminide layer with a ceramic layer.

With the foregoing and other objects in view there is also provided, in accordance with the invention, an article of manufacture, comprising a metal substrate defining a body with an outer surface; and a coating system disposed on the outer surface, the coating system including
an alloy layer as a coating on the outer surface and having a polished surface facing away from the outer surface;
an aluminide layer as a coating on the alloy layer and having a substantially uniform thickness; and
a ceramic layer as a coating on the aluminide layer; said body having a channel formed therein defining an inner surface of said body, said inner surfachaving an aluminide layer as a coating thereon.

The aluminide layer has a preferred thickness of less than 10 micrometers (µm).

The alloy layer has a preferred surface roughness of less than 2 micrometers at a surface adjacent the aluminide layer.

In accordance with yet another feature of the invention, the alloy layer is formed of an MCrAlY alloy, and the metal substrate is a nickel or cobalt-based superalloy substrate. In accordance with yet an additional feature of the invention, the aluminide layer consists essentially of a compound selected from the group consisting of aluminum, nickel aluminide and platinum aluminide.

In accordance with an added feature of the invention, the body has a channel formed therein defining an inner surface of the body, the inner surface having an aluminide layer as a coating thereon. The aluminide layer on the inner surface has a preferred thickness of less than 50 micrometers and it may also be formed of aluminum, nickel aluminide or platinum aluminide.

In accordance with again a further feature of the invention, the body and the coating system together form a gas turbine component. The gas turbine component may be an airfoil component comprising an airfoil portion for exposure to a gas stream streaming along the article in operation, the airfoil portion being covered by the coating system.

In accordance with a concomitant feature of the invention, the channel extends through the airfoil portion.

Other features which are considered as characteristic for the invention are set forth in the appended claims.

Although the invention is illustrated and described herein as embodied in a metal component with a high-temperature protection coating system and a method of coating the component, it is nevertheless not intended to be limited to the details shown, since various modifications and structural changes may be made therein within the scope and range of equivalents of the claims.

The construction of the invention, however, together with additional objects and advantages thereof will be best understood from the following description of the specific embodiment when read in connection with the accompanying drawings.
Fig. 1 is a fragmentary cross-sectional view through a coating system applied in accordance with the invention; and
Fig. 2 is a perspective view of a gas turbine airfoil component comprising the substrate and protective coating system shown in Fig. 1.

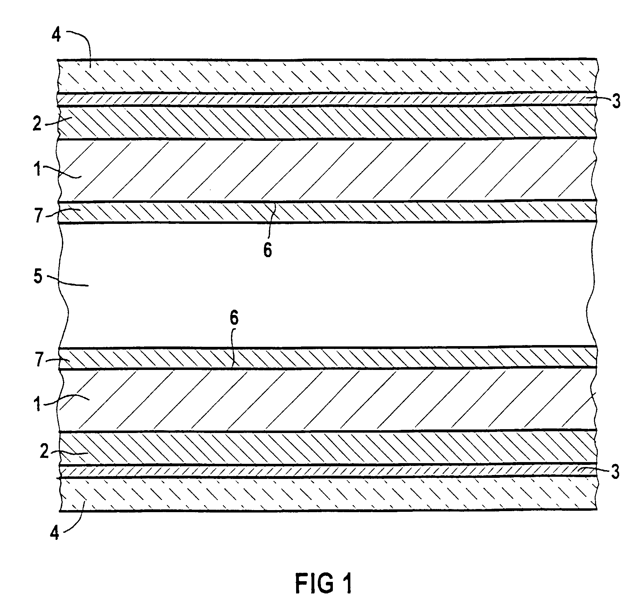

Referring now to the figures of the drawing in detail and first, particularly, to Fig. 1 thereof, there is seen a substrate having a protective coating system incorporating an alloy layer, an aluminide layer and a ceramic layer as a coating thereon as well as an aluminide layer as a coating on an inner surface formed in a channel.

The substrate 1 forms the base of an article of manufacture, in particular a gas turbine component, which in operation is subject to a heavy thermal load and concurrently to corrosive and erosive attack. The substrate 1 is formed of a material which is suitable to provide strength and structural stability when subjected to a heavy thermal load and possibly an additional mechanical load by severe forces like centrifugal forces. A material which is widely recognized and employed for such a purpose in a gas turbine engine is a nickel or cobalt-based superalloy.

In order to limit the thermal load imposed on the substrate 1, it is coated with a coating system. This coating system also protects the substrate 1 against corrosive attack including oxidative attack. The coating system comprises an alloy layer 2, an aluminide layer 3 on the alloy layer 2 and a ceramic layer 4 on the aluminide layer 3. The alloy layer 2 consists of an MCrAlY alloy and preferably of an MCrAlY alloy as patented in one of the above-mentioned Czech et al. U.S. Patent Nos. 5,154,885; 5,268,238; 5,273,712 and 5,401,307. The ceramic layer 4 is made from a columnar grained ceramic, in particular consisting essentially of a stabilized or partly stabilized zirconia.

Within the substrate 1, there is located a channel 5 where cooling fluid may flow through to cool the substrate 1 during operation. This channel 5 is bounded by an inner wall 6, on which an aluminide layer 7 is placed.

The coating process for the different layers 2, 3, 4 and 7 is performed according to a special program in order to avoid disadvantageous interactions between the layers 2, 3, 4 and 7 and their constituents. Particularly critical are the aluminide layers 3 and 7. On the inner wall 6, the aluminide layer 7 is dedicated to a special function, namely to protect the inner wall 6 against corrosive attack. The aluminide layer 3 outside the channel 5 may be unnecessary with respect to the function the coating system is provided for, but it is a hardly avoidable byproduct of the process of applying the aluminide layer 7 on the inner wall 6.

To incorporate the aluminide layer 3 into a well-functioning coating system and to avoid any disadvantage which might result from its presence, this aluminide layer 3 is placed between the priorly coated and polished alloy layer 2 and the ceramic layer 4 to be coated subsequently. The polishing of the alloy layer 2 defines a smooth boundary to the aluminide layer 3, which in turn can be polished or surface-treated otherwise as may be desired. It is preferred to adjust a thickness of the alumide layer 3 below 10 micrometers, expediently by surface-finishing after placing. To this end, it is also preferred to polish the alloy layer 2 prior to coating the aluminide layer 3 to have a surface roughness below 2 micrometers.

The thickness of the aluminide layer 7 on the inner surface can be matched to the particulars of the function intended for this layer. It is preferred to keep a thickness of that aluminide layer 7 below 50 micrometers.

The selection of the material for the aluminide layers 3 and 7 is not particularly critical. Preferredly, one of aluminum, nickel aluminide and platinum aluminide is used. The aluminide layers 3 and 7 are expediently placed by gas phase aluminizing, which is a process well known and frequently employed in the art but which has the disadvantage of spilling the aluminide onto locations where it might not be desired, necessitating special measures as disclosed herein.

The coating process of the alloy layer 2 is generally less critical, as it is normally done by a plasma spraying process which is more selective as to locations to be coated than the gas phase process used to aluminize and generally poses no special problem. Eventually, the coating process of the alloy layer 2 requires a dedicated thermal treatment to homogenize and/or bond the alloy layer 2 to the substrate 1.

The position of the aluminide layer 3 between the alloy layer 2 and the ceramic layer 4 has the additional benefit of providing a source of aluminum to diffuse into the alloy layer 2, increasing its desired protective properties, and providing an interface to develop under suitable conditions a thin alumina layer which is an excellent means for anchoring the ceramic layer 4. The thickness of the aluminide layer 3 should however be not too high, in order to avoid an embrittling of the alloy layer 2 by containing an aluminum content being too high. Generally, a limit of 10 micrometers for the thickness of the aluminide layer is considered to be effective.

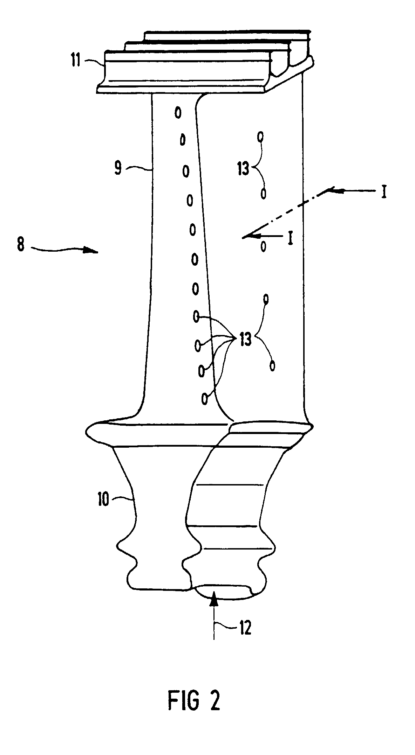

Fig. 2 shows the whole gas turbine component, namely a gas turbine blade 8. The component 8 has an airfoil portion 9, which in operation forms an "active part" of the gas turbine engine and subjected to a gas stream streaming along, a mounting portion 10, at which the component 6 is fixedly held in its place during operation, and a sealing portion 11, which prevents the gas stream from leaving a flow path designed.

The sectional view of Fig. 1 may be taken along the line I-I.

In order to cool the turbine blade 8, it has channels 5 to guide a cooling fluid therethrough, as exemplified in Fig. 1. The cooling fluid is usually supplied at the mounting portion 10, as indicated by arrow 12. The cooling fluid leaves the turbine blade 8 through orifices 13 and merges into the gas stream streaming along the airfoil portion 9.

In applying the coating system onto the turbine blade 8 as explained above, the orifices 13 might eventually need special attention to keep them from being choked with material during the coating of a layer 2, 3, 4 or 7, where the coating process of the alloy layer 2 and the coating process of the ceramic layer 4 are usually most critical. It is therefore preferred to check the orifices 13 after a layer 2, 3, 4 or 7 has been coated. Eventually, the orifices 13 are not made until at least some of the layers 2, 3, 4 and 7 are coated. Preferably, the orifices 13 are made, particularly by laser milling or ECM, after the alloy layer 2 has been coated, but before it is polished.

After applying the aluminide layers 3 and 7, throttle sheets can be inserted and fastened into the channel 5, if necessary.

A final heat treatment, particularly dedicated to finish the ceramic layer 4, may expediently finish the manufacturing process.

## Claims

1. A method of coating an outer surface of a body, of an article of manufacture formed of a metal, said body having at least one channel formed therein defining an inner surface of the body, the method which comprises the following steps:
coating said outer surface of the body with an alloy layer and polishing the alloy layer;
coating the alloy layer and concurrently the inner surface with an aluminide layer having a substantially uniform thickness; and
coating the aluminide layer with a ceramic layer.

2. The method according to claim 1, wherein the step of coating the alloy layer comprises
providing the aluminide layer on the inner surface having a thickness of up to 50 micrometers; and
providing the aluminide layer on the alloy layer having a thickness of up to 10 micrometers.

3. The method according to claim 2, wherein the step of coating the alloy layer with the aluminide layer comprises polishing the aluminide layer.

4. The method according to one of claims 1 to 3, wherein the step of coating the alloy layer comprises depositing by gas phase aluminizing.

5. The method according to claim 1, wherein the step of coating the alloy layer comprises depositing by gas phase aluminizing.

6. The method according to one of the preceding claims, which comprises the step of polishing the aluminide layer prior to the step of coating the aluminide layer with the ceramic layer.

7. The method according to one of the preceding claims, wherein the step of polishing the alloy layer comprises providing the alloy layer having a surface roughness Ra being less than 2 micrometers.

8. A method of coating an outer surface of a body of an article of manufacture formed of a metal, the method which comprises the following steps:
coating said outer surface of the body with an alloy layer and polishing the alloy layer;
coating the alloy layer with gas phase aluminizing an aluminide layer having a substantially uniform thickness; and
coating the aluminide layer with a ceramic layer.

9. An article of manufacture, comprising a metal substrate defining a body with an outer surface; and a coating system disposed on said outer surface, said coating system including
an alloy layer as a coating on said outer surface and having a polished surface facing away from said outer surface;
an aluminide layer as a coating on said alloy layer and having a substantially uniform thickness; and
a ceramic layer as a coating on said aluminide layer; said body having a channel formed therein defining an inner surface of said body, said inner surface having an aluminide layer as a coating thereon.

10. The article according to claim 9, wherein said aluminide layer has a thickness less than 10 micrometers.

11. The article according to claim 9 or 10, wherein said alloy layer has a surface roughness Ra less than 2 micrometers at a surface adjacent said aluminide layer.

12. The article according to one of claims 9 to 11, wherein said alloy layer is formed of an MCrAlY alloy.

13. The article according to one of claims 9 to 12, wherein said metal substrate is a nickel or cobalt-based superalloy substrate.

14. The article according to one of claims 9 to 13, wherein said aluminide layer consists essentially of a compound selected from the group consisting of aluminum, nickel aluminide and platinum aluminide.

15. The article according to one of claims 9 to 14, wherein said aluminide layer on said inner surface has a thickness less than 50 micrometers.

16. The article according to one of claims 9 to 15, wherein said aluminide layer on said outer surface and said aluminide layer on said inner surface consist essentially of a compound selected from the group consisting of aluminum, nickel aluminide and platinum aluminide.

17. The article according to one of claims 9 to 16, wherein said body and said coating system form a gas turbine component.

18. The article according to claim 16, wherein the gas turbine component is an airfoil component comprising an airfoil portion for exposure to a gas stream streaming along the article in operation, said airfoil portion being covered by said coating system.

19. The article according to claim 18, wherein said channel extends through said airfoil portion.

## Patentansprüche

1. Verfahren zum Beschichten einer Außenfläche eines Körpers eines aus Metall gebildeten Produktionsartikels, wobei dieser Körper mindestens einen darin gebildeten Kanal aufweist, der eine Innenfläche des Körpers begrenzt, wobei das Verfahren folgende Stufen umfaßt:
Beschichtung der besagten Außenfläche des Körpers mit einer Legierungsschicht und Polieren der Legierungsschicht,
Beschichtung der Legierungsschicht und gleichzeitig der Innenfläche mit einer Aluminidschicht weitgehend gleichförmiger Dicke und
Beschichtung der Aluminidschicht mit einer keramischen Schicht.

2. Verfahren nach Anspruch 1, wobei die Stufe der Beschichtung mit der Legierungsschicht folgendes umfaßt:
Herstellung der Aluminidschicht auf der Innenfläche mit einer Dicke von bis zu 50 Mikrometer und
Herstellung der Aluminidschicht auf der Legierungsschicht mit einer Dicke bis zu 10 Mikrometer.

3. Verfahren nach Anspruch 2, wobei die Stufe der Beschichtung der Legierungsschicht mit der Aluminidschicht das Polieren der Aluminidschicht einschließt.

4. Verfahren nach einem der Ansprüche 1 bis 3, wobei die Stufe der Beschichtung der Legierungsschicht mittels Aluminierung durch Abscheidung aus der Gasphase erfolgt.

5. Verfahren nach Anspruch 1, wobei die Stufe der Beschichtung der Legierungsschicht mittels Aluminierung durch Abscheidung aus der Gasphase erfolgt.

6. Verfahren nach einem der vorhergehenden Ansprüche, wobei die Stufe des Polierens der Aluminidschicht vor der Stufe der Beschichtung der Aluminidschicht mit der keramischen Schicht erfolgt.

7. Verfahren nach einem der vorhergehenden Ansprüche, wobei die Stufe des Polierens der Legierungsschicht darin besteht, daß man die Legierungsschicht mit einer Oberflächenrauheit Ra von weniger als 2 Mikrometer versieht.

8. Verfahren zur Beschichtung einer Außenfläche eines Körpers eines aus Metall gebildeten Produktionsartikels, wobei das Verfahren folgende Stufen umfaßt: dieses Beschichtungssystem folgendes einschließt:
Beschichtung der besagten Außenfläche des Körpers mit einer Legierungsschicht und Polieren der Legierungsschicht,
Beschichtung der Legierungsschicht durch Aluminieren aus der Gasphase mit einer Aluminidschicht weitgehend gleichförmiger Dicke und
Beschichtung der Aluminidschicht mit einer keramischen Schicht.

9. Produktionsartikel, bestehend aus einem einen Körper mit einer Außenfläche begrenzenden Metallsubstrat und einem auf dieser Außenfläche angeordneten Beschichtungssystem, wobei dieses Beschichtungssystem folgendes einschließt:
eine Legierungsschicht als Beschichtung auf besagter Außenfläche und mit einer von dieser abgewandten polierten Fläche,
eine Aluminidschicht als Beschichtung auf besagter Legierungsschicht und mit weitgehend gleichförmiger Dicke und
eine keramische Schicht als Beschichtung auf besagter Aluminidschicht,
wobei jener Körper einen darin gebildeten Kanal aufweist, der eine Innenfläche dieses Körpers begrenzt, wobei diese Innenfläche auf sich eine Aluminidschicht als Beschichtung aufweist.

10. Artikel nach Anspruch 9, wobei besagte Aluminidschicht eine Dicke von weniger als 10 Mikrometer aufweist.

11. Artikel nach Anspruch 9 oder 10, wobei besagte Legierungsschicht auf einer jener Aluminidschicht benachbarten Fläche eine Oberflächenrauheit Ra von weniger als 2 Mikrometer aufweist.

12. Artikel nach einem der Ansprüche 9 bis 11, wobei besagte Legierungsschicht aus einer MCrAlY-Legierung gebildet ist.

13. Artikel nach einem der Ansprüche 9 bis 12, wobei besagtes Metallsubstrat ein Superlegierungssubstrat auf Nickel- oder Kobaltgrundlage ist.

14. Artikel nach einem der Ansprüche 9 bis 13, wobei besagte Aluminidschicht im wesentlichen aus einer aus der Aluminium, Nickelaluminid und Platinaluminid umfassenden Gruppe ausgewählten Verbindung besteht.

15. Artikel nach einem der Ansprüche 9 bis 14, wobei besagte Aluminidschicht auf jener Innenfläche eine Dicke von weniger als 50 Mikrometer aufweist.

16. Artikel nach einem der Ansprüche 9 bis 15, wobei besagte Aluminidschicht auf jener Außenfläche und besagte Aluminidschicht auf jener Innenfläche im wesentlichen aus einer aus der Aluminium, Nickelaluminid und Platinaluminid umfassenden Gruppe ausgewählten Verbindung bestehen.

17. Artikel nach einem der Ansprüche 9 bis 16, wobei besagter Körper und besagtes Beschichtungssystem einen Gasturbinenbauteil bilden.

18. Artikel nach Anspruch 17, wobei das Gasturbinenbauteil ein Tragflächenprofilbauteil mit einem Tragflächenprofilabschnitt ist, der im Betrieb einem entlang des Artikels strömenden Gasstrom ausgesetzt wird, wobei dieser Tragflächenprofilabschnitt mit besagtem Beschichtungssystem überzogen ist.

19. Artikel nach Anspruch 18, wobei sich besagter Kanal durch diesen Tragflächenprofilabschnitt erstreckt.

## Revendications

1. Procédé pour revêtir une surface extérieure d'un corps, d'un article manufacturé formé d'un métal, le corps ayant au moins un canal formé en son sein définissant une surface intérieure du corps, le procédé comportant les étapes suivantes qui consistent à :
revêtir la surface extérieure du corps d'une couche d'alliage et polir la couche d'alliage ;
revêtir la couche d'alliage et concurremment la surface intérieure d'une couche en aluminiure ayant une épaisseur sensiblement uniforme ; et
revêtir la couche d'aluminiure d'une couche de céramique.

2. Procédé suivant la revendication 1, dans lequel l'étape de revêtement de la couche d'alliage comprend l'étape qui consiste à
disposer la couche d'aluminiure sur la surface intérieure de sorte qu'elle ait une épaisseur allant jusqu'à 50 µm ; et
disposer la couche d'aluminiure sur la couche d'alliage de sorte qu'elle ait une épaisseur allant jusqu'à 10 µm.

3. Procédé suivant la revendication 2, dans lequel l'étape de revêtement de la couche d'alliage de la couche d'aluminiure comprend le fait de polir la couche d'aluminiure.

4. Procédé suivant l'une des revendications 1 à 3, dans lequel l'étape de revêtement de la couche d'alliage comprend un dépôt par aluminiage en phase gazeuse.

5. Procédé suivant la revendication 1, dans lequel l'étape de revêtement de la couche d'alliage comprend un dépôt par aluminiage en phase gazeuse.

6. Procédé suivant l'une des revendications précédentes, qui comporte l'étape qui consiste à polir la couche d'aluminiure avant l'étape de revêtement de la couche d'aluminiure de la couche de céramique.

7. Procédé suivant l'une des revendications précédentes, dans lequel l'étape de polissage de la couche d'alliage comprend le fait de prévoir pour la couche d'alliage une rugosité Ra de surface qui est inférieure à 2 µm.

8. Procédé de revêtement d'une surface extérieure d'un corps d'un article manufacturé formé d'un métal, le procédé comportant les étapes suivantes qui consistent à :
revêtir la surface extérieure du corps d'une couche d'alliage et polir la couche d'alliage ;
revêtir la couche d'alliage par aluminiage en phase gazeuse d'une couche d'aluminiure ayant une épaisseur sensiblement uniforme ; et
revêtir la couche d'aluminiure d'une couche en céramique.

9. Article manufacturé, comportant un substrat métallique définissant un corps ayant une surface extérieure ; et un système de revêtement disposé sur la surface extérieure, le système de revêtement comportant
une couche d'alliage en tant qu'un revêtement sur la surface extérieure et ayant une surface polie orientée dans la direction s'éloignant de la surface extérieure ;
une couche en aluminiure en tant qu'un revêtement sur la couche d'alliage et ayant une épaisseur sensiblement uniforme ; et
une couche de céramique en tant qu'un revêtement sur la couche d'aluminiure ;
le corps ayant un canal qui est formé en son sein définissant une surface intérieure du corps, la surface intérieure ayant sur son dessus une couche d'aluminiure en tant qu'un revêtement.

10. Article suivant la revendication 9, dans lequel la couche d'aluminiure a une épaisseur inférieure à 10 µm.

11. Article suivant la revendication 9 ou 10, dans lequel la couche d'alliage a une rugosité Ra de surface inférieure à 2 µm à une surface adjacente à la couche d'aluminiure.

12. Article suivant l'une des revendications 9 à 11, dans lequel la couche d'alliage est formée d'un alliage MCrAIY.

13. Article suivant l'une des revendications 9 à 12, dans lequel le substrat métallique est un substrat de superalliage à base de cobalt ou nickel.

14. Article suivant l'une des revendications 9 à 13, dans lequel la couche d'aluminiure est constituée sensiblement d'un composé sélectionné parmi le groupe constitué de l'aluminium, de l'aluminiure de nickel et de l'aluminiure de platine.

15. Article suivant l'une des revendications 9 à 14, dans lequel la couche d'aluminiure sur la surface intérieure a une épaisseur inférieure à 50 µm.

16. Article suivant l'une des revendications 9 à 15, dans lequel la couche d'aluminiure sur la surface extérieure et la couche d'aluminiure sur la surface intérieure sont constituées sensiblement d'un composé sélectionné parmi le groupe constitué d'aluminium, d'aluminiure de nickel et d'aluminiure de platine.

17. Article suivant l'une des revendications 9 à 16, dans lequel le corps et le système de revêtement forment un constituant de turbine à gaz.

18. Article suivant la revendication 16, dans lequel le constituant de turbine de gaz est un constituant formant aile portante comportant une partie formant aile portante pour l'exposition à un courant gazeux s'écoulant le long de l'article en fonctionnement, la partie formant aile portante étant recouverte par le système de revêtement.

19. Article suivant la revendication 18, dans lequel le canal s'étend à travers la partie formant aile portante.
